# EUROPEAN PATENT SPECIFICATION

(11) **EP 1 511 252 B1**
(45) Date of publication and mention of the grant of the patent: **14.11.2007**
(21) Application number: 04300471.2
(22) Date of filing: 26.07.2004
(51) Int. Cl.: H04L 12/64

(54) **Method for requesting information regarding a network subscriber station in a network of distributed stations, and network subscriber station for carrying out the method**
Verfahren zur Anfrage von Nachrichten in Verband mit einer Netzwerkteilnehmerstelle in einem Netzwerk von verteilten Teilnehmerstellen, und Netzwerkteilnehmerstelle zur Durchführung des Verfahrens
Méthode pour demander des informations concernant une station d'abonné de réseau dans un réseau de stations distribuées, et station d'abonné de réseau pour effectuer cette méthode

(30) Priority: 26.08.2003 DE 10339535
(43) Date of publication of application: 02.03.2005
(73) Proprietor: Thomson Licensing, 92100 Boulogne-Billancourt (FR)
(72) Inventor: Gläser, Frank, 30163, Hannover (DE); Köhler, Ralf, 30455, Hannover (DE); Brocke, Jens, 30880, Laatzen (DE); Knuth, Kurt, 30457, Hannover (DE)
(74) Representative: Schäferjohann, Volker

(56) References cited:
- EP-A- 1 014 650
- EP-A- 1 184 791
- US-A- 6 157 972
- IEEE: "P1394A DRAFT STANDARD FOR A HIGH PERFORMANCE SERIAL BUS (AMENDMENT)" P1394A DRAFT STANDARD, 11 February 2000 (2000-02-11), XP002179320 NEW YORK, USA
- INSTITUTE OF ELECTRICAL AND ELECTRONICS ENGINEERS: "IEEE Standard for a High Performance Serial Bus - Link layer specification" IEEE STANDARD FOR AN HIGH PERFORMANCE SERIAL BUS. IEEE STD 1394 - 1995, NEW YORK, NY : IEEE, US, 1995, page COMPLETE39, XP002287654 ISBN: 1-55937-583-3

## Description

The invention relates to the technical field of data communication in a network of distributed stations, particularly to a home network.

### Background to the invention

A home network connects a very wide variety of appliances to one another. Such appliances may emanate from the field of consumer electronics, such as television set, video recorder, DVD player, satellite receiver, CD player, MD player, amplifier, radio, camcorder etc. In this context, mention is also made of a personal computer, which may likewise be regarded as a consumer electronics appliance today. In the meantime, however, home networks are also known, which incorporate other appliances as well. One example mentioned is white goods appliances, such as a washing machine, electric oven, microwave oven, refrigerator, dishwasher etc.

To network appliances from the field of consumer electronics, industry has developed appropriate communication systems. The primary intention here is wire-based networking of the appliances using the "IEEE 1394" bus system, which allows data to be interchanged at a very high data rate between the individual network subscriber stations, subsequently called network stations for short. The original IEEE 1394 1995 standard specifies the data transfer speeds S100, S200 and S400. These correspond to data transfer rates of 100 Mbit/s, 200 Mbit/s and 400 Mbit/s. In the meantime, the original standard has been extended and the current version IEEE 1394b specifies even higher data transfer speeds S800, S1200 and S1600.

Such high data rates are required, in particular, for transfers between consumer electronics appliances. The reason for this is that the typical application for the data interchange between consumer electronics appliances involves playback of a track from a video or audio source, either a video film or a piece of music, and the associated data stream being transferred to another consumer electronics appliance or a plurality of other consumer electronics appliances. For this instance of application, a data link is set up between the relevant appliances which are interchanging data with one another. This data link is then used to transfer data packets on a regular basis. This form of data transfer is referred to in the IEEE 1394 standard as isochronous data transfer, which involves data packets being transferred from the data source to the data sink or to the data sinks on a regular basis, at particular intervals of time.

In addition, asynchronous data transfer also takes place in the IEEE 1394 network. In this case, data packets are transferred more or less as required. The number of such asynchronous data packets sent via the bus is dependent on the data volume which arises. Asynchronous data transfer is predominantly used for identifying and controlling an appliance in the network from another appliance which is in the network.

In terms of the topology of the IEEE 1394 network, the IEEE 1394 standard contains only a few restrictions. The admissible bus topology corresponds to a tree structure. Depending on the instance of application, the tree structure may take different forms, however. In this regard, the network can be made very variable.

A further prominent feature of the IEEE 1394 bus system is that it is possible to connect and disconnect appliances while the network is in ongoing operation. This is also known as "life insert feature" in technical jargon. Whenever an appliance has been connected or disconnected, a bus reset operation is initiated. After every bus reset operation, a self-configuration phase for the network takes place. In this phase, each IEEE 1394 network station sends a self-ID information item (called "self-ID packet" in the standard) to the other network stations. This ensures that each network station is informed about what other network stations are connected in the network. The self-ID information is used by each network station to identify itself to the other network stations in the network. Using the self-ID information received from the other network stations, each network station is capable of creating a "node list" and of storing it in a memory device associated with the network station.

From EP-A-1 184 791 it is known to first try a block read operation for reading the IEEE 1394 configuration ROM and if it is indicated that the station to which the read request was directed is incompatible with block read access, a quadlet read access is repeated in order to read the configuration ROM content.

### Invention

This stored information is then used by a driver program in the network station to ascertain more precise information about each network subscriber station. This more precise information is compiled in a "node information" table by the driver program. To this end, the IEEE 1394 standard prescribes that each network station must hold station-specific information about the properties and capabilities of the network station in a memory area called a "configuration ROM" which is reserved specifically for the purpose. For reasons of time optimization, the requesting network station attempts to read the desired information from the "configuration ROM" in the block. This is done using a "block read operation". In this context, the inventors have encountered the difficulty below.

In line with the IEEE 1394 specification, an IEEE 1394 interface needs to support a minimum of just "quadlet" read operations for accessing the proprietary "configuration ROM". In this context, a quadlet is a data word comprising four bytes. These four bytes are stored at a reserved address according to the memory organization of the "configuration ROM". A situation may thus arise in which the network station does not support the requested block read operation. In this case, the requesting station should return an access-type error code. This can be done using the "ack_type_error" and "resp_type_error" error codes specified in the IEEE 1394 standard.

In practice, it has been found that some appliances with an IEEE 1394 interface which support only quadlet read operations return an incorrect error code, namely the address error code "resp_address_error" (or else "ack_address_error", from the IEEE 1394a standard onwards), for example, for a block read access operation. According to the IEEE 1394 standard, this error code actually means that there is not "configuration ROM" at all at the address reserved therefor. When this error code is interpreted in compliance with the standard, the driver program is thus not able to put the network station answering in this manner into the "node information" table.

In line with the invention, however, it is possible to ascertain the necessary entries in the "configuration ROM" for such a network station. This is done by virtue of receipt of the address error code being followed by the requesting network station reattempting to read the station-specific information in the "configuration ROM" using word read access operations, i.e. in the specific case using quadlet read access operations. If the address error code has actually been generated incorrectly, the read access operations are now confirmed properly and the station-specific information can be collected upon successive word read access operations. Thus, supposedly incorrect network stations may then in fact still be put into the node information table.

If a word read access operation is answered with the address error code again, then the "configuration ROM" actually does not exist at the reserved address, and the network station cannot be entered into the node information table.

The word read access operation is also performed when the result returned from the block read access operation is the access-type error code. This error code has been provided in the IEEE 1394 standard specifically for this purpose and is intended to be generated when the network station does not support block read access.

The invention is claimed in general terms in the independent claims 1 and 9. Advantageous measures and further improvements are contained in the dependent claims.

### Drawings

The invention is explained in more detail below with reference to drawings, in which:
- Figure 1: shows the structure of an exemplary IEEE 1394 network;
- Figure 2: shows the general format of the "configuration ROM";
- Figure 3: shows the structure of the "bus_info_block" within the "configuration ROM";
- Figure 4: shows the format of the "module_vendor_ID" entry within the "root_directory" in the "configuration ROM"; and
- Figure 5: shows the "protocol architecture" of an IEEE 1394 node based on the IEEE 1394 1995 standard;
- Figure 6: shows an example of a flowchart for a program which is executed in the "node controller" in a requesting network station in order to request the station-specific information from a network station.

### Exemplary embodiments of the invention

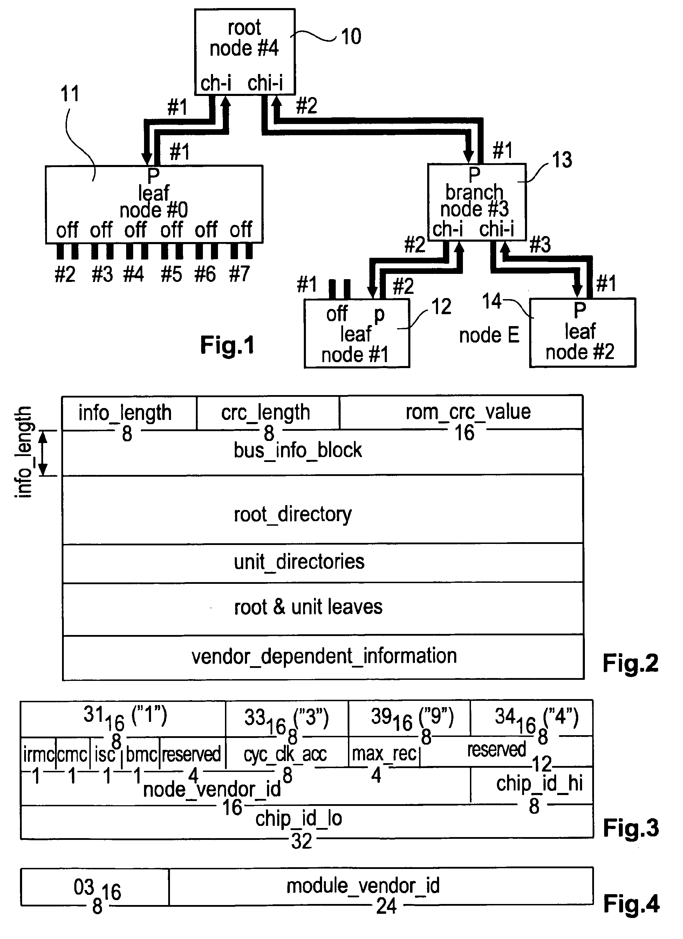

Figure 1 shows an exemplary IEEE 1394 network having five network subscriber stations. These are connected together in a tree structure. In this case, a respective node is connected to another node by means of a separate IEEE 1394 network cable. The number of cable ports may vary from node to node. In the example shown, the station 13 is equipped with a "3-port physical layer chip", the two network nodes 12 and 10 are equipped with a respective 2-port physical layer chip, the station 11 is equipped with a 7-port physical layer chip, and the station 14 is equipped with a 1-port physical layer chip.

Following a bus reset operation, the bus initialization takes place in two phases. These are "tree identification" and "self-identification". During the "tree identification" phase, the current bus structure is ascertained by analyzing the use of the ports on the network stations. This phase is also used to determine which network station is undertaking the root function. During the "self-identification" phase, each network station identifies itself and at the same time also provides the information regarding what transmission speed it supports. This is done by sending self-ID information packets in an order stipulated by the bus structure.

Figure 1 shows the order in which the network nodes send their self-ID information packets during the bus initialization phase. The station with the reference numeral 11 is allocated to the bus first on the basis of the tree structure shown. It is thus the node with the lowest node number (node ID, #0). Accordingly, the bus is subsequently allocated to the individual nodes in the following order: node 12, node 14, node 13, node 10. When all of the network stations have transmitted their self-ID information packets, the node list can be constructed in all of the network stations by analyzing all of the self-ID information packets. The two phases of the bus initialization are described precisely in the IEEE 1394 1995 standard.

Following the bus initialization, the node information table is constructed by requesting more precise information about the individual network stations. This phase is described more precisely below. When the node list has been created in the self-initialization phase after a bus reset operation, further station-specific information is requested in the next phase. This involves all of the nodes on the bus sending a read operation for the "configuration ROM" at all of the nodes on the bus. This operation may also take place simultaneously, for example. This phase is complete when each network station has requested the station-specific information from all network stations, and the "node information" table containing the station-specific information has been created.

Figure 2 shows the general format of the "configuration ROM" based on the IEEE 1394 standard. As is shown, the "configuration ROM" is divided into data words of 32 bits, corresponding to 4 bytes. Each 32 bit-width data word can be addressed separately. The IEEE 1394 standard also stipulates the address at which the "configuration ROM" needs to be set up. This is normally done by reserving (allocating) the appropriate memory area for the "configuration ROM" in the network station's freely usable RAM store. The first quadlet of the "configuration ROM" contains the information about the length of the "configuration ROM", the CRC length and also the actual CRC check code for the "configuration ROM". This is followed by the "bus_info_block". Further entries in the "configuration ROM" relate to the "root_directory", "unit_directory", "root & unit leaves" and the information about "vendor_dependent_information". All of the areas provided in the "configuration ROM" are defined in the IEEE 1394 standard. The station-specific information required for constructing the "node information" table varies according to the content required in it. To record, by way of example, all of the information from the BusInfoBlock in the "node information" table, the first 4 quadlets in the "configuration ROM" are read. Figure 3 shows the format of the "bus_info_block". The first quadlet merely stores the expression "1394" in ASCII format. The second quadlet of the "bus_info_block" contains entries about the capabilities of the network subscriber station. The entry irmc indicates whether the network subscriber station is capable of operating as an "isochronous resource manager". The entry cmc indicates whether the network station is capable of operating as a "cycle master". The entry isc indicates whether the network subscriber station supports isochronous data transfer. The information bmc indicates whether the network subscriber station is capable of operating as a "bus manager". Other important items are the entry "chip_id_hi" in the last byte of the third quadlet and the entry "chip_id_lo" in the fourth quadlet. This is because these two items of information are used to ascertain a unique global identification number for the network subscriber station. This identification number is allocated once and is also called a GUID, GUID standing for "Global Unique Identifier". Since network transactions in some home networks are to some extent performed using GUID addressing, this information is very important. One example mentioned is a typical HAVi network, HAVi standing for "Home Audio Video interoperability".

Figure 4 shows the format of the first quadlet of the "root_directory". This also contains a 24-bit "module_vendor_id" information item. This identifies the manufacturer of the appliance.

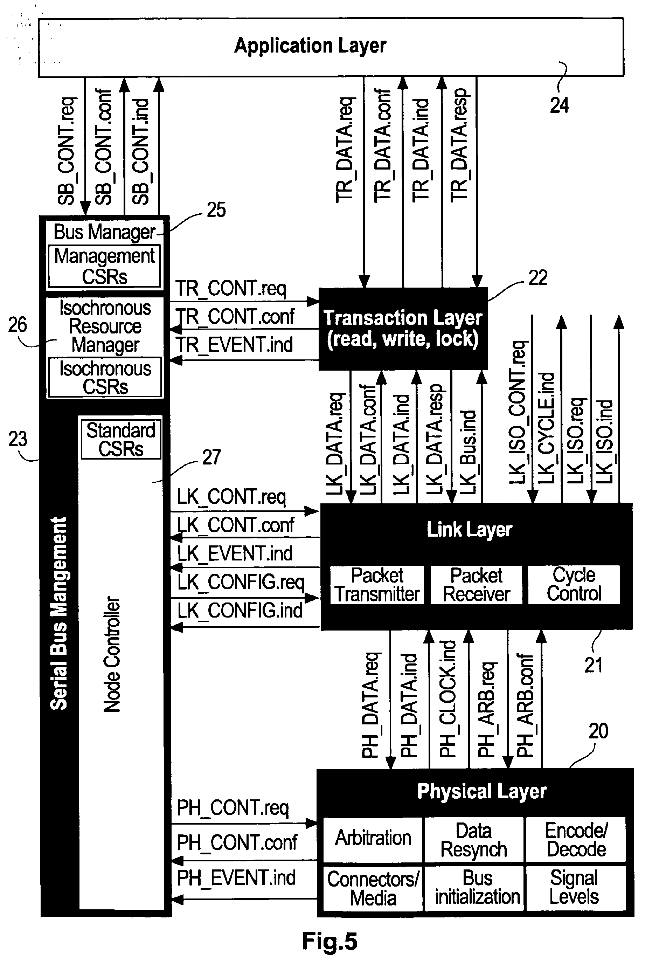

The text below explains the protocol architecture of an IEEE 1394 interface with reference to Figure 5. The bottom communication layer, the physical layer 20, is always produced using hardware. For this, separate ICs have been available for a long time. The next communication layer up, the data link layer 21, is normally likewise produced using hardware. Separate link ICs are likewise available on the market. The other layers shown, namely the "transaction layer" 22, "serial bus management" 23 and "application layer" 24, are normally implemented using software, which is then executed on a powerful microcontroller in the network station.

Within the layer for the "serial bus management" 23, the "node controller" 27, "isochronous resource manager" 26 and "bus manager" 25 components have been highlighted. In a 1394 network, at most a "bus manager" 25 and at most an "isochronous resource manager" 26 are active at one time, even if a plurality of network nodes are performing the respective functions. Which network node performs the respective function is determined after every bus reset operation in line with a method prescribed in the IEEE 1394 standard. If the "root" node is able to perform the respective function, said methods mean that it is highly probable that the respective function of the "root" is being activated. Alternatively, a situation may arise in which there is no "bus manager" 25 at all, so that the "isochronous resource manager" 26 (if present) then also needs to undertake a few tasks of the "bus manager" 25.

For the invention described at present, the "node control" 27 and "transaction layer" 22 components are fundamental, which is why the text below discusses these components more precisely.

The "transaction layer" 22 component comprises parts of the network layer and also of the transport layer in line with the OSI/ISO reference model for data communications. This component is described in detail in the IEEE 1394 1995 standard, however. It provides the transaction layer 22 component as a service involving data being written to a particular indicated address for another network station, data being read from an indicated network station at an indicated address, and data being sent to another network station, so as to have a function performed when the result is returned. Of fundamental importance to the invention is the service which can be used to perform a read transaction. The read transaction involves the "bus management" entity or the application layer sending a transaction request of type READ. The request contains the memory address at which the information can be found at the nodes, and also the number of data items which are required from this start address onward. The information regarding the network station to which this transaction is sent is forwarded directly from the bus management entity to the data link layer 21. The requested data are forwarded to the requesting "bus management" entity via the transaction layer 22 component. Should the requested data mean that an error code has been received in response, then the transaction layer 22 component likewise reports this error code to the "bus management" entity.

The IEEE 1394 standard provides the following error codes for read transactions:
"resp_conflict_error" or, from IEEE 1394a onward, "ack_conflict_error": this error code is intended to be returned when a transaction for the indicated address has already been started in the network station and is not yet complete.
"resp_data_error" or "ack_data_error": this error code is supplied if, by way of example, access to the "configuration ROM" has involved the presence of a CRC error being discovered.
"resp_type_error" or "ack_type_error": this error code is provided if the network station does not support block read access following the request.
"resp_address_error" or, from IEEE 1394a onward, "ack_address_error": this error code should be generated if there are no data at all at the requested address in the requested network station, i.e. if this memory area has not been allocated at all.

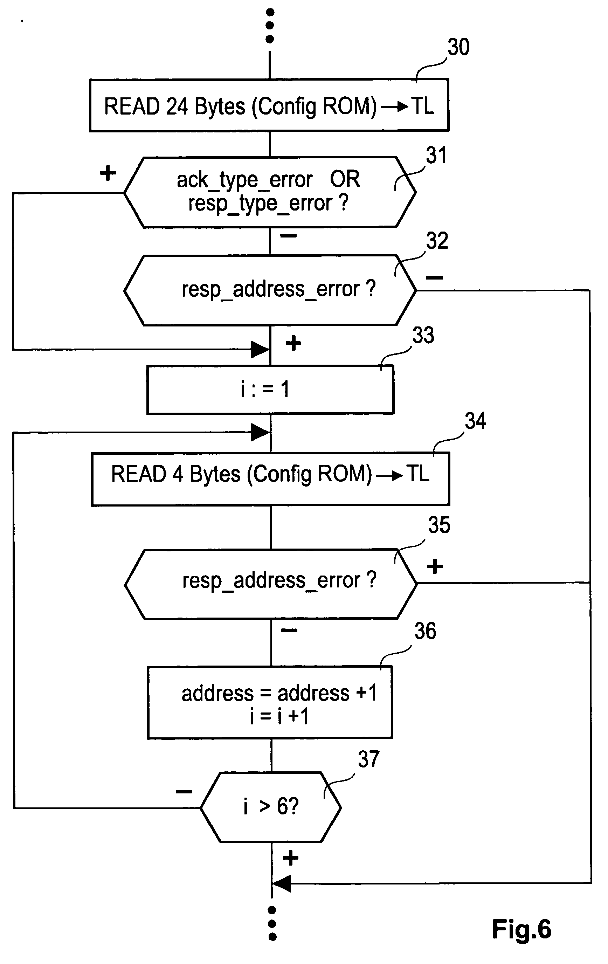

The text below uses the flow chart shown in Figure 6 to explain how the "node controller" 27 requests the station-specific information from another network station and how it reacts to the error codes returned.

In step 30, the "node controller" 27 for the requesting network station sends the request to the "transaction layer" 22 to read, by way of example, the first 24 bytes of the "configuration ROM" in a specified network station. In check 31, "node controller" 27 checks whether an error code of type "ack_type_error" or "resp_type_error" has been returned. If it is the case, the "node controller" attempts to request the station-specific information using word read access operations. To this end, the step 33 is called within the flowchart in order to check the information. If no error code cited in step 31 was received in that step, then the subsequent check 32 is used to check whether the error code "resp_address_error" was returned. If so, the station-specific information is requested again at the indicated address in this case, specifically using word read access operations, despite the actual meaning that the indicated address is not available. In this case too, the checking procedure is then continued in the flowchart with step 33. If this error code also did not appear, there is a skip to the end of the checking procedure. In step 33, a count variable i is set to 1. In the next step 34, the read request for the first quadlet of the "configuration ROM" using a quadlet read access operation is then sent to the "transaction layer" 22. The subsequent check 35 then checks whether a "resp_address_error" may have been returned again. If this is the case, then, in line with the invention, it is assumed that reading should actually take place at an invalid address, and the checking procedure is thus terminated. If, in the other case, valid data are returned and this error code does not appear, however, then the address for the next quadlet of the "configuration ROM" is determined in step 36 and the count variable i is incremented. A subsequent word read access operation is then performed after check 37 has checked that the index variable i has still not exceeded the value 6. As a result, the first six quadlets of the "configuration ROM" are each read correctly, even though it has not been possible to access these data using a block read access operation. The checking procedure is subsequently finished.

The invention is not limited to the exemplary embodiment described in the present case. The invention may also be in a form such that, even when a different error code is returned, attempts are at first still made to obtain the desired data using word read access operations.

## Claims

1. A method for requesting information regarding a network subscriber station in a network of distributed stations, where the network subscriber station has a reserved memory area for the station-specific information, wherein a requesting network subscriber station first uses a block read access operation (30) to request the station-specific information from another network subscriber station which is to be requested, wherein, if this block read access operation is answered with an error code indicating that the station does not support block read access, the requesting network subscriber station rerequests the station-specific information using word read access operations (34), **characterized in that**, if the block read access operation is answered with an error code different to the error code indicating that the stations does not support block read access, the requesting network subscriber station rerequests the station-specific information using word read access operations (34).

2. The method as claimed in claim 1, wherein the request for the station-specific information is ended when a word read access operation (34) is answered with an error code again.

3. The method as claimed in claim 1 or 2, wherein the error code different to the error code indicating that the station does not support block read access, and taken into account for initiating the fresh request for the station-specific information is an address error code.

4. The method as claimed in claim 3, wherein the error code different to the error code indicating that the station does not support block read access, and taken into account for initiating the fresh request for the station-specific information is also an access-type error code.

5. The method as claimed in one of the preceding claims, wherein the reserved memory area corresponds to the configuration ROM in an IEEE 1394 network subscriber station.

6. The method as claimed in one of claims 3 to 5, wherein the address error code corresponds to the error code "resp_address_error" or "ack_address_error".

7. The method as claimed in one of claims 4 to 6, wherein the access-type error code corresponds to the error code "ack_type_error" or to the error code "resp_type_error" based on the IEEE 1394 standard.

8. The method as claimed in one of the preceding claims, wherein the station-specific information requested is contents of the IEEE 1394 configuration ROM.

9. The method as claimed in one of the preceding claims, wherein the word read access operation (34) corresponds to a quadlet read access operation.

10. A network subscriber station as a requesting station for carrying out the method as claimed in one of the preceding claims, having means (22, 27) for requesting station-specific information from another network subscriber station using a block read access operation (30) or a word read access operation (34), wherein the station-specific information from the other network subscriber station is requested by virtue of the requesting network subscriber station having been set up such that it first uses a block read access operation (30) to request the station-specific information and, if this block read access operation is answered with an error code indicating that the station does not support block read access, it rerequests the station-specific information using word read access operations (34) **characterized in that**, if the block read access operation is answered with an error code different to the error code indicating that the station does not support block read access, the requesting network subscriber station rerequests the station-specific information using word read access operations (34).

11. The network subscriber station as claimed in claim 10, wherein the error code different to the error code indicating that the station does not support block read access, and taken into account for initiating the fresh request for the station-specific information is an address error code.

12. The network subscriber station as claimed in claim 10, wherein the error code different to the error code indicating that the station does not support block read access, and taken into account for initiating the fresh request for the station-specific information is also an access-type error code.

## Patentansprüche

1. Verfahren zum Abfragen von Informationen bezüglich einer Netzwerkteilnehmerstation in einem Netzwerk mit verteilten Stationen, bei dem die Netzwerkteilnehmerstation einen reservierten Speicherbereich für die stationsspezifischen Informationen aufweist, wobei eine abfragende Netzwerkteilnehmerstation zunächst mit einem Blocklesezugriff (30) die stationsspezifischen Informationen von einer anderen abzufragenden Netzwerkteilnehmerstation anfordert, und wenn dieser Blocklesezugriff mit einem Fehlerkode beantwortet wird, der anzeigt, dass die Station den Blocklesezugriff nicht unterstützt, die abfragende Netzwerkteilnehmerstation die stationsspezifischen Informationen mit Wortlesezugriffen (34) erneut anfordert, **dadurch gekennzeichnet, dass** bei Beantwortung des Blocklesezugriffs mit einem anderen Fehlerkode als dem, der anzeigt, dass die Station den Blocklesezugriff nicht unterstützt, die abfragende Netzwerkteilnemerstation erneut die stationsspezifischen Informationen mit Wortlesezugriffen (34) anfordert.

2. Verfahren nach Anspruch 1, **dadurch gekennzeichnet, daß** das Abfragen der stationsspezifischen Informationen beendet wird, wenn ein Wortlesezugriff (34) erneut mit einem Fehlerkode beantwortet wird.

3. Verfahren nach Anspruch 1 oder 2, **dadurch gekennzeichnet, daß** der andere Fehlerkode, als der, der anzeigt, dass die Station den Blocklesezugriff nicht unterstützt, und zur Auslösung der erneuten Anforderung der stationsspezifischen Informationen berücksichtigt wird, ein Adressfehlerkode ist.

4. Verfahren nach Ansprch 3, **dadurch gekennzeichnet, daß** der andere Fehlerkode als der, der anzeigt, dass die Station den Blocklesezugriff nicht unterstützt, und zur Auslösung der erneuten Anforderung der stationsspezifischen Informationen berücksichtigt wird, ein Zugriffstyp-Fehlerkode ist.

5. Verfahren nach einem der vorhergehenden Ansprüche, **dadurch gekennzeichnet, daß** der reservierte Speicherbereich dem Konfigurations-ROM bei einer IEEE-1394-Netzwerkteilnehmerstation entspricht.

6. Verfahren nach einem der Ansprüche 3 bis 5, **dadurch gekennzeichnet, daß** der Adressfehlerkode dem Fehlerkode "resp_address_error" oder "ack_address_error" entspricht.

7. Verfahren nach einem der Ansprüche 4 bis 6, **dadurch gekennzeichnet, daß** der Zugriffstyp-Fehlerkode dem Fehlerkode "ack_type_error" oder dem Fehlerkode "resp_type_error" gemäß IEEE-1394-Standard entspricht.

8. Verfahren nach einem der vorhergehenden Ansprüche, **dadurch gekennzeichnet, daß** als stationsspezifische Informationen Inhalte des IEEE-1394-Konfigurations-ROM abgefragt werden.

9. Verfahren nach einem der vorhergehenden Ansprüche, **dadurch gekennzeichnet, daß** der Wortlesezugriff (34) einem Quadlet-Lesezugriff entspricht.

10. Netzwerkteilnehmerstation als abfragende Station zur Ausführung des Verfahrens nach einem der vorhergehenden Ansprüche, mit Mitteln (22, 27) zum Abfragen von stationsspezifischen Informationen von einer anderen Netzwerkteilnehmerstation per Blocklesezugriff (30) oder Wortlesezugriff (34), wobei zur Abfrage von den stationsspezifischen Informationen der anderen Netzwerkteilnehmerstation die abfragende Netzwerkteilnehmerstation so eingerichtet ist, dass sie die stationsspezifischen Informationen zunächst mit einem Blocklesezugriff (30) anfordert, und wenn dieser Blocklesezugriff mit einem Fehlerkode beantwortet wird, der anzeigt, dass die Station den Blocklesezugriff nicht unterstützt, sie die stationsspezifischen Informationen mit Wortlesezugriffen (34) erneut anfordert, **dadurch gekennzeichnet, daß** bei Beantwortung des Blocklesezugriffs mit einem anderen Fehlerkode als dem, der anzeigt, dass die Station den Blocklesezugriff nicht unterstützt, die abfragende Netzwerkteilnehmerstation die stationsspezifischen Informationen mit Wortlesezugriffen (34) erneut anfordert.

11. Netzwerkteilnehmerstation nach Anspruch 10, **dadurch gekennzeichnet, daß** der andere Fehlerkode als der, der anzeigt, dass die Station den Blocklesezugriff nicht unterstützt, und zur Auslösung der erneuten Anforderung der stationsspezifischen Informationen berücksichtigt wird, ein Adressfehlerkode ist.

12. Netzwerkteilnehmerstation nach Anspruch 10, **dadurch gekennzeichnet, daß** der andere Fehlerkode als der, der anzeigt, dass die Station den Blocklesezugriff nicht unterstützt, und zur Auslösung der erneuten Anforderung berücksichtigt wird, auch ein Zugriffstyp-Fehlerkode ist.

## Revendications

1. Méthode pour demander des informations concernant une station d'abonné de réseau dans un réseau de stations distribuées, où la station d'abonné de réseau dispose d'une zone de mémoire réservée pour les informations spécifiques à la station, où une station d'abonné de réseau demandeuse utilise tout d'abord une opération d'accès en lecture de bloc (30) pour demander les informations spécifiques à la station provenant d'une autre station d'abonné de réseau, devant être requises, où, si cette opération d'accès en lecture de bloc obtient en réponse un code d'erreur indiquant que la station ne prend pas en charge un accès en lecture de bloc, la station d'abonné de réseau demandeuse demande à nouveau les informations spécifiques à la station à l'aide d'opérations d'accès en lecture de mot (34), **caractérisée en ce que**, si l'opération d'accès en lecture de bloc obtient en réponse un code d'erreur différent du code d'erreur indiquant que la station ne prend pas en charge un accès en lecture de bloc, la station d'abonné de réseau demandeuse demande à nouveau les informations spécifiques à la station à l'aide d'opérations d'accès en lecture de mot (34).

2. Méthode selon la revendication 1, où la requête pour les informations spécifiques à la station se termine lorsqu'une opération d'accès en lecture de mot (34) obtient à nouveau en réponse un code d'erreur.

3. Méthode selon la revendication 1 ou 2, où le code d'erreur différent du code d'erreur indiquant que la station ne prend pas en charge un accès en lecture de bloc, et pris en compte pour déclencher la nouvelle requête pour les informations spécifiques à la station est un code d'erreur d'adresse.

4. Méthode selon la revendication 3, où le code d'erreur différent du code d'erreur indiquant que la station ne prend pas en charge un accès en lecture de bloc, et pris en compte pour déclencher la nouvelle requête pour les informations spécifiques à la station est également un code d'erreur de type d'accès.

5. Méthode selon une des revendications précédentes, où la zone de mémoire réservée correspond à la ROM de configuration dans une station d'abonné de réseau IEEE 1394.

6. Méthode selon une des revendications 3 à 5, où le code d'erreur d'adresse correspond au code d'erreur
« resp_address_error » ou « ack_address_error ».

7. Méthode selon une des revendications 4 à 6, où le code d'erreur de type d'accès correspond au code d'erreur
« ack_type_error » ou au code d'erreur « resp_type_error » basé sur la norme IEEE 1394.

8. Méthode selon une des revendications précédentes, où les informations spécifiques à la station demandées constituent des contenus de la ROM de configuration IEEE 1394.

9. Méthode selon une des revendications précédentes, où l'opération d'accès en lecture de mot (34) correspond à une opération d'accès en lecture de quadlet.

10. Station d'abonné de réseau en tant que station demandeuse pour effectuer la méthode revendiquée dans une des revendications précédentes, disposant d'un moyen (22, 27) pour demander des informations spécifiques à la station provenant d'une autre station d'abonné de réseau à l'aide d'une opération d'accès en lecture de bloc (30) ou une opération d'accès en lecture de mot (34), où les informations spécifiques à la station provenant de l'autre station d'abonné de réseau sont demandées en vertu de la station d'abonné de réseau demandeuse paramétrée de telle sorte qu'elle utilise tout d'abord une opération d'accès en lecture de bloc (30) pour demander les informations spécifiques à la station et, si cette opération d'accès en lecture de bloc obtient en réponse un code d'erreur indiquant que la station ne prend pas en charge un accès en lecture de bloc, elle demande à nouveau les informations spécifiques à la station à l'aide d'opérations d'accès en lecture de mot (34), **caractérisée en ce que**, si l'opération d'accès en lecture de bloc obtient en réponse un code d'erreur différent du code d'erreur indiquant que la station ne prend pas en charge un accès en lecture de bloc, la station d'abonné de réseau demandeuse demande à nouveau les informations spécifiques à la station à l'aide d'opérations d'accès en lecture de mot.

11. Station d'abonné de réseau selon la revendication 10, où le code d'erreur différent du code d'erreur indiquant que la station ne prend pas en charge un accès en lecture de bloc, et pris en compte pour déclencher la nouvelle requête pour les informations spécifiques à la station est un code d'erreur d'adresse.

12. Station d'abonné de réseau selon la revendication 10, où le code d'erreur différent du code d'erreur indiquant que la station ne prend pas en charge un accès en lecture de bloc, et pris en compte pour déclencher la nouvelle requête pour les informations spécifiques à la station est également un code d'erreur de type d'accès.
